# EUROPÄISCHE PATENTSCHRIFT

(11) **EP 0 685 749 B1**
(45) Veröffentlichungstag und Bekanntmachung des Hinweises auf die Patenterteilung: **12.08.1998**
(21) Anmeldenummer: 95108428.4
(22) Anmeldetag: 01.06.1995
(51) Int. Cl.: G02B 5/30, C09K 19/00

(54) **Optische Elemente mit farb- und polarisationsselektiver Reflexion enthaltend LC-Pigmente**
Optical elements containing liquid crystal pigments having colour and polarisation selective reflectivity
Eléments optiques avec des pigments de cristaux liquides sélectifs suivant la couleur et la polarisation lors de la réflexion

(30) Priorität: 01.06.1994 DE 4419239
(43) Veröffentlichungstag der Anmeldung: 06.12.1995
(73) Patentinhaber: Consortium für Elektrochemische Industrie GmbH, D-81379 München (DE)
(72) Erfinder: Krätzschmar, Oliver, Dr., D-80939 München (DE); Gebhard, Thilo, D-81371 München (DE); Ehmann, Silvia, D-82178 Puchheim (DE); Kreuzer, Franz-Heinrich, Dr., D-82152 Martinsried (DE)
(74) Vertreter: Potten, Holger

(56) Entgegenhaltungen:
- EP-A- 0 358 208
- EP-A- 0 383 376
- EP-A- 0 601 483
- WO-A-95/08786
- US-A- 3 679 290
- US-A- 3 942 871
- US-A- 4 637 896
- US-A- 4 688 901
- APPLIED PHYSICS LETTERS, Bd.54, Nr.24, 12. Juni 1989, NEW YORK US Seiten 2395 - 2397 TSAI ET AL 'Optical Notch Filter using Thermotropic Liquid Crystalline Polymers'
- SID 90 DIGEST, Mai 1990, PLAYA DEL REY, CA, US Seiten 110 - 113 MAURER ET AL 'Polarizing Color Filters Made From Cholesteric LC-Silicones'

## Beschreibung

Die Erfindung betrifft optische Elemente mit farb- und polarisationsselektiver Reflexion enthaltend LC-Pigmente.

Die Verwendung von cholesterischen Flüssigkristallen für die Herstellung von Farbfiltern und Polarisatoren ist beispielsweise aus US-A-3,679,290 oder R. Maurer, D. Andrejewski, F.-H. Kreuzer, A. Miller, "Polarizing Color Filters Made From Cholesteric LC-Silicones", SID Digest 1990, S. 110-113 oder M.L. Tsai, S.H. Chen, S.D. Jacobs, "Optical Notch Filters using Thermotropic Liquid Crystalline Polymers", Appl. Phys. Lett. 1989, 24(54), S. 2395-2397 bekannt.

Aus WO 95/08786, Stand der Technik nach Art. 54(3) für die Vertragsstaaten DE, FR, GB, IT, sind wellenlängen- und polarisationsselektive farbige Materialien bekannt, die Pigmente ("flakes") eingebettet in ein transparentes Bindemittel enthalten, wobei die Pigmente mindestens eine dreidimensional vernetzte Substanz flüssigkristalliner Struktur mit chiraler Phase umfassen eine Dicke von 1 bis 100 Mikrometer und einen Durchmesser von 1 bis 10000 Mikrometer haben und der Brechungsindex des Bindemittelsystems mit dem Brechungsindex der jeweils eingesetzten Pigmente übereinstimmt.

WO 95/08786 offenbart die Anwendung dieser farbigen Materialien für Sicherheitsmarkierungen und dekorative Anwendungen.

Cholesterische Flüssigkristalle können durch geeignete Orientierungsverfahren in eine verdrillte Struktur mit einer von der Art und Zusammensetzung des Flüssigkristalls abhängigen Ganghöhe gebracht werden. Der Drehsinn kann, abhängig von der verwendeten chiralen Komponente, sowohl links- als auch rechtshändig sein. Diese verdrillte Anordnung der Flüssigkristallmoleküle führt zu der bekannten selektiven Reflexion der cholesterischen Flüssigkristalle (siehe beispielsweise H. Kelker, R. Hatz, "Handbook of Liquid Crystals", Verlag Chemie, Weinheim, 1980, Kap. 7, S. 293 ff): zirkular polarisiertes Licht, dessen Wellenlänge und Drehsinn mit der Ganghöhe des Flüssigkristalls übereinstimmen, wird vollständig reflektiert. Entgegengesetzt zirkular polarisiertes Licht bzw. solches mit abweichender Wellenlänge kann den cholesterischen Flüssigkristall ungehindert passieren. Von weißem unpolarisiertem Licht, welches sämtliche Wellenlängen und Polarisationszustände enthält, wird dementsprechend nur eine schmale zirkular polarisierte Bande reflektiert.
Cholesterische Flüssigkristalle können daher als wellenlängenselektive Reflektoren bzw. Polarisatoren eingesetzt werden. Vor allem auch die Möglichkeit durch geeignete Wahl von Art und Anteil der chiralen Gruppen im cholesterischen Flüssigkristall Reflexionswellenlängen vom nahen ultraviolett bis weit in den infraroten Wellenlängenbereich realisieren zu können, ist ein außerordentlicher Vorteil der cholesterischen Flüssigkristalle.

Für die Herstellung optischer Komponenten ist es notwendig, den cholesterischen Flüssigkristall geeignet zu orientieren und diese Orientierung anschließend zu fixieren. Die Orientierung erfolgt üblicherweise bei erhöhter Temperatur im Bereich der cholesterischen Phase durch Scheren einer etwa 5-25 µm dicken Flüssigkristallschicht zwischen Glasplatten. Für eine ausreichende Orientierung tragen die Glasplatten Orientierungsschichten, üblicherweise aus geriebenem Polyimid oder Polyvinylalkohol, oder es werden elektrische oder magnetische Felder verwendet. Um eine geringe Viskosität sicherzustellen, liegt die Verarbeitungstemperatur meist einige °C unterhalb des Klärpunktes, typischerweise bei 80-160°C. Die Fixierung der Orientierung erfolgt entweder durch photochemische Vernetzung oder durch Verwendung von Materialien mit Glasübergangstemperaturen oberhalb von 50°C.

Diese Art der Herstellung ist mit einer Reihe von Problemen verbunden, die einen breiten Einsatz dieser Filter bisher verhindert haben. Hier sind vor allem die Beschränkung auf Flächen von wenigen cm² zu nennen, sowie die außerordentlich schwer automatisierbare Herstellung. Die Beschränkung auf Glasplatten oder andere mechanisch stabile Substrate führt. zu einem hohen Gewicht der Filter und verhindert außerdem die Herstellung beliebig gekrümmter oder flexibler Filter.

Bisher noch ungelöst ist außerdem die Herstellung von Mehrschichtsystemen, die für breitbandige Polarisatoren, polarisationsunabhängige Farbfilter oder für Filter mit besonderer Charakteristik, beispielsweise sog. Notch-Filter, benötigt werden. Für diese Anwendungen müssen entweder Schichten mit verschiedenen Reflexionswellenlängen oder unterschiedlichem Drehsinn des zirkular polarisierten Lichtes kombiniert werden.

Die Erfindung betrifft für die Vertragsstaaten CH, LI und SE die in Anspruch 1 genannten wellenlängen- und polarisationsselektiven optischen Elemente. Weiterbildungen sind in den neben-und untergeordneten Ansprüchen genannt.

Für die Vertragsstaaten DE, FR, GB, IT betrifft die Erfindung einen Farbfilter, einen Breitbandpolarisator und einen Notch-Filter gemäß den Ansprüchen 1-3, die im folgenden auch allgemein als optische Elemente bezeichnet werden.

In einer bevorzugten Ausführungsform bestehen die LC-Pigmente ausschließlich aus einer Interferenzschicht, wobei diese Interferenzschicht aus orientierten dreidimensional vernetzten flüssigkristallinen Substanzen mit chiraler Phase besteht. Die Farbigkeit dieser Pigmente beruht somit ausschließlich auf einem Interferenzeffekt. Das von diesen Pigmenten reflektierte Licht ist zirkular polarisiert.

In einer anderen Ausführungsform enthalten die LC-Pigmente zusätzlich zu den orientierten dreidimensional vernetzten flüssigkristallinen Substanzen mit chiraler Phase andere Farbstoffe. Geeignete Farbstoffe sind in den nichtpolymerisierten Ausgangssubstanzen zur Herstellung der erfindungsgemäßen Pigmente löslich.

Die LC-Pigmente enthalten kein Trägermaterial, auf welches die crientierten dreidimensional vernetzten flüssigkristallinen Substanzen mit chiraler Phase aufgetragen sind.

Die LC-Pigmente sind dadurch erhältlich, daß dreidimensional vernetzbare flüssigkristalline Substanzen mit chiraler Phase gegebenenfalls nach Zumischen weiterer Farbstoffe orientiert werden, dreidimensional vernetzt werden und auf die erwünschte Korngröße zerkleinert werden.

Bevorzugt werden die dreidimensional vernetzbaren flüssigkristallinen Substanzen mit chiraler Phase auf eine Unterlage aufgebracht, auf dieser Unterlage vernetzt und nach dem Vernetzen von der Unterlage abgelöst.

Flüssigkristalline Substanzen, die als Ausgangssubstanzen für die Herstellung der LC-Pigmente geeignet sind, besitzen eine verdrillte Struktur mit einer Ganghöhe, die einer Wellenlänge des Lichtes im Bereich von UV bis IR entspricht. Diese Struktur findet sich beispielsweise bei cholesterischen Flüssigkristallen. Cholesterische Flüssigkristalle, oder allgemein flüssigkristalline Substanzen mit chiraler Phase, die eine verdrillte Struktur mit einer gewünschten Ganghöhe besitzen, können aus nematischen, smektischen oder diskotischen Strukturen erhalten werden, indem man ihnen eine chirale Substanz zusetzt. Art und Anteil der chiralen Substanz bestimmen die Ganghöhe der verdrillten Struktur und damit die Wellenlänge des reflektierten Lichtes. Die Verdrillung der Struktur kann sowohl links- als auch rechtshändig sein. Die Ausgangssubstanzen müssen zudem polymerisierbare, polykondensierbare oder einer Polyaddition zugängliche Gruppen, von denen zumindest ein Teil in Form di-, tri- oder höherfunktioneller Bausteine vorliegt, enthalten. Beispiele für solche Gruppen sind Methacryloxy- und Acryloxygruppen.

Geeignete Materialien und ihre Herstellung sind beispielsweise in DE-C2-3,604,757, in EP-A2-358,208, in EP-A-0 066 137 (entspricht US 4,388,453) oder in der in D.J. Broer et al in 14. Int. Liquid Conf., Abstracts II, 921 (1992) genannten Literatur beschrieben.

Bevorzugt geeignet sind dreidimensional vernetzbare Polyorganosiloxane nach EP-A-358,208.

Als Ausgangsstoffe zur Herstellung der LC-Pigmente können jedoch grundsätzlich alle cholesterischen Flüssigkristalle dienen. Es kann eine Art von cholesterischem Flüssigkristall, es kann aber auch ein Gemisch aus mindestens zwei dieser Flüssigkristalle eingesetzt werden; es kann ein Farbstoff, es können auch Gemische aus mindestens zwei Farbstoffen eingesetzt werden.

Der im Verfahren zur Herstellung der LC-Pigmente einzusetzende Farbstoff ist in einer weiteren bevorzugten Ausführungsform im eingesetzten Flüssigkristall(gemisch) löslich. Vorzugsweise wird kein Gemisch von mehreren cholesterischen flüssigkristallinen Substanzen, sondern eine einzelne reine cholesterische flüssigkristalline Substanz im erfindungsgemäßen Verfahren eingesetzt.

Das Zumischen der Farbstoffe zu den übrigen Ausgangssubstanzen erfolgt in üblicher Art und Weise beispielsweise durch Einrühren. Das Zumischen dieser Stoffe ändert nichts an den weiteren Verfahrensschritten zur Herstellung der LC-Pigmente.

Eine jeweils gewünschte Pigmentfarbe kann auch dadurch erhalten werden, daß definierte Flüssigkristall-Grundmischungen in geeigneten Mengenverhältnissen gemischt werden. Auch in diesem Falle ändern sich die weiteren Verfahrensschritte zur Herstellung der erfindungsgemäßen Pigmente nicht. Die weitere Beschreibung des Herstellungsverfahrens gilt daher für alle Varianten der erfindungsmäßen Pigmente.

Flüssigkristalle mit verdrillten Phasen bilden ihre optischen Eigenschaften erst dann aus, wenn die einzelnen Moleküle in Schichten angeordnet sind und innerhalb einer Schicht einheitlich geordnet sind. Die Moleküle ändern dabei von Schicht zu Schicht ihre Vorzugsrichtung, so daß schraubenförmige Strukturen entstehen. Um dies zu erreichen, werden die Moleküle mittels bekannter Methoden wie beispielsweise durch Orientierungsschichten oder elektrische oder magnetische Felder orientiert. Solche Methoden sind beispeilsweise aus den folgenden Literaturstellen bekannt:
CA113 (22), 201523y; CA113 (14), 124523u; CA112 (18), 169216s; CA112 (16), 149138q; CA112 (4), 21552c; CA111 (16), 144258y; CA111 (4), 24780r;

Bei der Herstellung der LC-Pigmente werden die genannten Ausgangssubstanzen in bekannter Weise orientiert. Dies kann beispielsweise durch Aufrakeln auf eine Metall-, Kunststoffoder Glasunterlage geschehen. Diese Unterlage kann gegebenenfalls mit einer Orientierungsschicht z.B. aus Polyimid oder Polyvinylalkohol versehen sein. Sie kann zu diesem Zweck auch silanisiert sein. Es ist jedoch ebenso möglich, die Ausgangssubstanz zwischen zwei Folien zu scheren. Bevorzugt werden eine oder zwei Polyethylenterephthalat Folien verwendet.

Das Aufrakeln flüssigkristalliner Polyorganosiloxane auf eine Folie ist beispielsweise aus EP-A-358,208 bekannt.

Die Vernetzung der orientierten flüssigkristallinen Substanzen erfolgt, wie für das jeweilige Material aus dem Stand der Technik bekannt. So können beispielsweise flüssigkristalline Polyorganosiloxane nach dem in der EP-A-66 137 beschriebenen Verfahren thermisch vernetzt werden. Die in der EP-A-358 208 beschriebenen flüssigkristallinen Polyorganosiloxane lassen sich photochemisch beispielsweise durch Bestrahlen mit UV-Licht dreidimensional vernetzen. Einen Überblick über Verfahren, orientierte Ausgangsstoffe photochemisch zu vernetzen, findet sich bei C.G. Roffey, Photopolymerisation of Surface Coatings, (1982) John Willey & Sons, Chichester, S. 137-208.
Die vernetzten orientierten flüssigkristallinen Substanzen mit chiraler Phase werden gegebenenfalls von der Unterlage abgelöst. Bei Verwendung einer Folie als Unterlage kann die mechanische Abtrennung der spröden vernetzten Flüssigkristalle von der Unterlage z.B. dadurch erfolgen, daß die Unterlage über eine Umlenkrolle mit kleinem Durchmesser geführt wird. Dadurch blättert das vernetzte Material von der Folie ab. Jede andere Methode, mit der sich das polymerisierte Material von der Unterlage entfernen läßt, ist jedoch ebenso geeignet.

Das orientierte dreidimensional vernetzte trägerlose flüssigkristalline Material wird auf eine jeweils erwünschte Korngröße zerkleinert. Dies kann z. B. durch Mahlen beispielsweise in Universalmühlen erfolgen. Je nach der erwünschten Anwendung der Pigmente können Korngrößen mit einem Durchmesser von etwa 10 mm bis zu einem µm hergestellt werden. Bevorzugt haben die Pigmente eine Korngröße zwischen 5 mm und 5 µm. Die Pigmente haben eine Dicke zwischen 1 und 100 µm, vorzugsweise 5 bis 50 µm.

Das Mahlgut kann anschließend zur Verengung der Korngrößenverteilung beispielsweise durch einen Siebprozeß klassiert werden.

Jedes LC-Pigmentpartikel kann aufgrund seiner farb- und polarisationsselektiven Reflexion als Farbfilter und/oder Polarisator betrachtet werden. Infolge ihrer Geometrie (Plättchenform) lassen sich die einzelnen Pigmentpartikel bei der Verarbeitung parallel zueinander ausrichten. Eine derartige Schicht von ausgerichteten LC-Pigmenten in einem transparenten Bindemittel besitzt daher die gleichen optischen Eigenschaften wie ein konventionell aus cholesterischen Flüssigkristallen hergestelltes optisches Element.

Die LC-Pigmente lassen sich beliebig miteinander mischen.

Die Herstellung von optischen Komponenten enthaltend LC-Pigmente erfolgt durch Mischen der Pigmente mit den gewünschten Eigenschaften (Reflexionsfarbe, Polarisationsrichtung) mit einem geeigneten Bindemittelsystem.

Geeignet sind alle bekannten transparenten Bindemittelsysteme, deren Brechungsindex mit dem der jeweils eingesetzten LC-Pigmente übereinstimmt.

Vorzugsweise geeignet sind polymerisierbare Harze (UP-Harze, Siliconharze, Epoxidharze), Dispersionen, lösungsmittelhaltige Lacke bzw. Wasserlacke, polymerisierbare LC-Silicone oder alle transparenten Kunststoffe, beispielsweise Polyvinylchlorid, Polymethylmethacrylat oder Polycarbonat, deren Brechungsindex mit dem der jeweils eingesetzten LC-Pigmente übereinstimmt.

Für Anwendungen, bei denen das vom optischen Element transmittierte Licht benötigt wird, muß das Bindemittel transparent sein, wobei jedoch zur Erzielung spezieller optischer Eigenschaften auch Farbstoffe im Bindemittel gelöst sein können.

Für Anwendungen, bei denen das vom optischen Element reflektierte Licht benötigt wird, können im Bindemittel auch organische oder anorganische Pigmente enthalten sein, die das von den LC-Pigmenten nicht reflektierte Licht absorbieren. Vorzugsweise enthalten die optischen Elemente jedoch neben den LC-Pigmenten keine weiteren organischen oder anorganischen Pigmente.

Die Lichtstreuung der optischen Elemente wird durch die Verwendung von Bindemitteln, deren Brechungsindex mit dem der LC-Pigmente übereinstimmt, sehr stark verringert.

Die Korngröße der LC-Pigmente kann zur Herstellung der erfindungsgemäßen optischen Elemente beliebig gewählt werden. Die Pigmente werden je nach gewünschtem Bedeckungsgrad in Mengen von 1-90 Gew.% bezogen auf die Mischung LC-Pigment/Bindemittel eingesetzt.

Das Aufbringen der Pigment/Bindemittelmischungen kann je nach Viskosität des Systems durch Sprühen, Tauchen, Streichen, Rakeln, spin coating o.ä. im Stand der Technik bekannten Verfahren auf einen geeigneten Untergrund erfolgen.

Durch die Auftragung mehrerer Schichten von LC-Pigmenten auf einen geeigneten Untergrund kann der Bedeckungsgrad erhöht werden. Die erfindungsgemäßen optischen Elemente haben vorzugsweise einen Bedeckungsgrad von 1. Unter Bedeckungsgrad ist im Sinne der Erfindung der Quotient aus Fläche des optischen Elements, die durch Pigmente abgedeckt ist, durch Fläche des optischen Elements, die mit der Mischung aus Bindemittel und LC-Pigment bedeckt ist, zu verstehen.

Eine zusätzliche pigmentfreie Deckschicht steigert die Oberflächenqualität des erfindungsgemäßen optischen Elements und verringert die Lichtstreuung.

Als Untergrund in optischen Elementen für Transmissionsanwendungen eignen sich alle transparenten Materialien. Beispiele für solche Materialien sind Glas, Quarz oder transparente Kunststoffe. Diese Materialien werden vorzugsweise in Form von Platten oder Folien eingesetzt.

Als Untergrund in optischen Elementen für Reflexionsanwendungen existieren keinerlei Beschränkungen, jedoch werden absorbierende Untergründe bevorzugt, die das von den Pigmenten nicht reflektierte Licht absorbieren. Für den Einsatz als Strahlteiler werden transparente Substrate verwendet.

Werden links- und rechtszirkular polarisierende LC-Pigmente gleicher Reflexionswellenlänge gemischt, so wird Licht im Bereich der Reflexionsbande dieser LC-Pigmente unabhängig von seinem Polarisationszustand vollständig reflektiert. Der mögliche Spektralbereich reicht von Ultraviolett bis Infrarot, je nach Reflexionsfarbe des verwendeten Pigmentes.

Für die Herstellung erfindungsgemäßer Farbfilter werden LC-Pigmente eingesetzt, die alle Wellenlängen außer der jeweils gewünschten reflektieren. Beispielsweise erhält man durch Mischen von blauen und roten jeweils rechts und links zirkular polarisierenden Pigmenten einen Farbfilter, der grünes Licht durchläßt.

Durch Einsatz von Pigmenten unterschiedlicher Farbe aber gleicher Polarisationsrichtung erhält man einen Breitbandzirkularpolarisator, da diese Mischung wellenlängenunabhängig nur eine Zirkularpolarisation reflektiert bzw. transmittiert. Analog lassen sich Filter mit spezieller Kennlinie, beispielsweise Notch-Filter herstellen.

Ein großer Vorteil der Erfindung ist das einfache, auch maschinell in einem kontinuierlichen Verfahren durchführbare Auftragen der Mischung aus LC-Pigmenten und Bindemittel auf große, auch beliebig gekrümmte Flächen.

Durch den Einsatz der LC-Pigmente können alle mit der direkten Verarbeitung von flüssigkristallinen Substanzen und der Vernetzung dieser Substanzen verbundenen Probleme umgangen werden. Weder Orientierungsschichten noch elektrische oder magnetische Felder werden benötigt. Das Auftragen der LC-Pigmente auf den jeweiligen Untergrund erfolgt durch gängige Methoden wie beispielsweise Spritzen, Streichen, Tauchen, spin coating. Jedes andere Verfahren zur Herstellung dünner Schichten ist jedoch ebenso geeignet.

Zur weiteren Erläuterung der Erfindung dienen die folgenden Beispiele.

### Präparation 1

### A: Polyorganosiloxane mit methacrylsäurehaltigen Seitenketten

Eine Lösung aus 233 g 4-(Prop-2-en-l-oxy)benzoesäurecholesterinester (erhältlich gemäß DE-A 31 10 048), 178 g 4-(Prop-2-en-1-oxy)benzoesäure(4-trimethylsiloxyphenyl)ester (erhältlich gemäß EP-A-358 208, Seite 9, Abschnitt C) und 56,9 g Tetramethylcyclotetrasiloxan in 400 ml Toluol wurde in Gegenwart von 24 mg Dicyclopentadienplatindichlorid 1 h und nach Zusatz einer Lösung von 1,2 g NaOH in 50 ml Ethanol weitere 7 h unter Rückfluß gekocht, um den Silylether zu spalten. Die Reaktionsmischung wurde auf 1/3 ihres Volumens im Rotationsverdampfer eingeengt, mit 7,5 g p-Toluolsulfonsäure und 154 g Methacrylsäureanhydrid versetzt und 1 h auf 100°C erwärmt. Nach dem Abdestillieren der flüchtigen Bestandteile wurde zweimal mit Methylenchlorid/Ethanol umgefällt.

Das Produkt hatte folgende physikalische und thermodynamische Daten: Glaspunkt: 14°C, Klärpunkt: 141°C.

### B Darstellung eines Pigments

4 g des Polyorganosiloxans, hergestellt wie in A beschrieben, wurden auf 70°C erwärmt und mit 0,11 g 2-Methyl-1-[4-(methylthio)phenyl]-2-morpholino-propanon-1 (erhältlich unter der Bezeichnung Irgacure 907 bei Ciba Marienberg GmbH, 6140 Bensheim 1) unter Umrühren homogen vermischt. Man erhielt eine rötlich schimmernde, zähflüssige LC-Masse. Das flüssigkristalline Material wurde bei 120°C mit Hilfe einer Rakel auf eine Polyethylenterephthalatfolie (Hoechst AG, Geschäftsbereich Folien, 6200 Wiesbaden 1) in Schichtdicken von 15 µm aufgetragen, wobei die Folie unter der fixierten Rakel mit einer Laufgeschwindigkeit von etwa 2 m/min fortbewegt wurde. Gleichzeitig erfolgte aufgrund des Schergefälles zwischen Rakel und Folie die Orientierung der flüssigkristallinen Moleküle, was durch eine rote Farberscheinung der Flüssigkristallschicht sichtbar wurde. Anschließend wurde diese Schicht mit Hilfe einer Quecksilberentladungslampe (80 W/cm) 5 Sekunden bestrahlt und so dreidimensional vernetzt. Der auf der Folie entstandene Film war im heißen und kalten Zustand klebfrei und spröde. Er hatte eine Reflexionswellenlänge von 560 nm. (Einfallswinkel und Beobachtungswinkel 45°, siehe Fig. 1). Die mechanische Abtrennung des auf diese Weise erhaltenen flüssigkristallinen Materials von der Unterlage wurde dadurch erreicht, daß die Folie über eine Umlenkrolle mit 10 cm Durchmesser geführt wurde und so das vernetzte Material vom Träger abblättert. Das Mahlen des vernetzten, substratfreien Materials wurde in einer Universalmühle durchgeführt. Durch 5 minütiges Mahlen der überwiegend in Blättchenform (Größe: einige Millimeter bis Zentimeter) anfallenden vernetzten Polyorganosiloxane entstand eine pulverförmige Fraktion. Das Mahlgut wurde dann zur Verengung der Korngrößenverteilung einem Siebprozeß unterworfen. Dazu wurden die gemahlenen Pigmente mittels eines Analysensiebes mit einer Maschenweite von 100 µm gesiebt.

### Präparation 2

### A Herstellung einer blauen Flüssigkristallmischung

Wie in Präparation 1 beschrieben, wurden 6 g des Polyorganosiloxans hergestellt. Dieses wurde in 50 ml Toluol gelöst. Dieser Lösung wurden 2.6 g Methacrylsäurecholesterinester (hergestellt wie in De Visser et al., J. Polym. Sci., A 1(9), 1893 (1971) beschrieben) und 9 mg Aluminiumkupferon (erhältlich unter der Bezeichnung Q1301 von Wako Chemicals GmbH, 4040 Neuss) zugegeben. Das Toluol wurde dann unter Vakuum bei 70°C im Rotationsverdampfer entfernt. Es entstand eine zähflüssige LC-Masse mit folgenden physikalischen und thermodynamischen Daten: Glaspunkt: 4°C, Klarpunkt: 132°C.

### B Darstellung eines Pigments

4 g der LC-Masse, hergestellt wie unter A beschrieben, wurden auf 70°C erwärmt und mit 0.11 g 2-Methyl-1-(4-(methylthio)phenyl)-2-morpholino-Propanon-l (erhältlich unter der Bezeichnung Irgacure 907 bei Ciba Marienberg GmbH, 6140 Bensheim 1) unter Umrühren homogen vermischt. Das flüssigkristalline Material wurde weiterverarbeitet wie unter B in Präparation 1 beschrieben, wobei es mit einer Temperatur von 80°C auf der Folie aufgetragen und photochemisch vernetzt wurde. Der auf der Folie entstandene Film hatte eine Reflexionswellenlänge von 400 nm. Die Pigmente hatten eine intensiv blaue Farbe.

### Präparation 3

### A Darstellung eines polymerisierbaren Monomeren:

### Methacryloxybenzoesäure(4-ethylphenyl)ester

Eine Lösung von 16,9 g 4-Trimethylsilyloxybenzoesäure(4-ethyl)phenylester (hergestellt analog der Vorschrift in EP-A-358 208, Seite 9, Abschnitt C) in 15 ml Toluol und 10 ml Ethanol wurde 1 Stunde unter Rückfluß gekocht und anschließend durch Erhitzen auf 100°C für 60 min von flüchtigen Bestandteilen befreit. Die verbliebenen 13,3 g 4-Hydroxybenzoesäure(4-ethyl)phenylester wurden zusammen mit 30 g Methacrylsäureanhydrid und 1,2 g Toluolsulfonsäure in 15 ml Toluol gelöst und 1 h auf 100°C erwärmt. Nach dem Abkühlen wurde das Produkt mit Hexan ausgefällt und aus Ethanol umkristallisiert.

### B Herstellung einer roten Flüssigkristallmischung

6 g des Polyorganosiloxans, hergestellt wie in Präparation 1 A wurden in 50 ml Toluol gelöst. Dieser Lösung wurden 1,5 g Methacryloxybenzoesäure(4-ethyl-phenyl)ester (hergestellt wie in Präp. 3 A) und 7,5 mg Aluminiumkupferon (erhältlich unter der Bezeichnung Q 1301 bei Wako Chemicals GmbH, 4040 Neuss) zugegeben. Das Toluol wurde dann unter Vakuum bei 70°C im Rotationsverdampfer entfernt. Es entsteht eine zähflüssige LC-Masse mit folgenden physikalischen und thermodynamischen Daten: Glaspunkt: -2°C, Klärpunkt: 124°C.

### C Darstellung eines Pigments

Die so erhaltene Mischung wurde behandelt wie in Präparation 2B beschrieben. Der auf der Folie entstandene Film hatte eine Reflexionswellenlänge von 630 nm. Man erhält Pigmente mit einer intensiv roten Farbe.

### Präparation 4

### A Herstellung einer grünen Flüssigkristallmischung

2,8 g der roten Farbmischung (hergestellt wie in Präparation 3 B beschrieben), 1,2 g der blauen Farbmischung (hergestellt wie in Präparation 2 A beschrieben) und 0,11 g 2-Methyl- 1-[4-(methylthio)phenyl]-2-morpholino-propanon-1 (erhältlich unter der Bezeichnung Irgacure 907 bei Ciba Marienberg GmbH, 6140 Bensheim 1) wurden unter Umrühren homogen vermischt. Man erhält eine grünlich schimmernde, zähflüssige LC-Masse mit folgenden thermodynamischen Daten: Glaspunkt: 2°C, Klärpunkt: 128°C.

### B Darstellung eines Pigments

Die so erhaltene Mischung wurde, wie in Präparation 2B beschrieben, weiterverarbeitet, indem sie bei einer Temperatur von 80°C auf eine Folie aufgetragen und photochemisch vernetzt wurde. Der auf der Folie entstandene Film hatte eine Reflexionswellenlänge von 530 nm. Man erhält Pigmente mit einer intensiv grünen Farbe.

### Beispiel 1

20 Gewichtsteile grünes linkszirkular polarisiertes Licht reflektierendes LC-Pigment gemäß Präparation 4 (Korngrößenfraktion 100 - 160 µm) wurden mit 80 Gewichtsteilen eines mit Härter (Cyclonox BT-50, Akzo) und Co-Beschleuniger (1%) gemäß der zugehörigen Vorschrift versetzten UP-Harzes (Vestopal 400, Hüls AG) innig gemischt. Durch Scheren zwischen zwei Glasplatten wurde ein etwa 50 µm dicker Film mit überwiegend parallel zu den Glasplatten orientierten Pigmentpartikeln erhalten, der nach Vorschrift ausgehärtet wurde.

Dieses optische Element zeigt bei senkrechtem Lichteinfall eine grüne Reflexionsfarbe, die sich mit zunehmendem Blickwinkel nach blau verschiebt. Im Durchlicht betrachtet erscheint es bei Bestrahlung mit weißem linkszirkular polarisiertem Licht violett, bei Bestrahlung mit weißem rechtszirkular polarisiertem Licht dagegen farblos.

### Beispiel 2

20 Gewichtsteile grünes LC-Pigment wurden mit 80 Gewichtsteilen flüssigkristallinen Siloxans (erhältlich unter der Bezeichnung CS4000A bei Wacker-Chemie GmbH, München) sowie 2 Gewichtsteilen Photoinitiator (erhältlich unter der Bezeichnung Irgacure907 bei Ciba AG) versetzt und bei 140° C vermischt. Durch Scheren zwischen Glasplatten wurde ein etwa 50 µm dicker Film mit überwiegend parallel zu den Glasplatten orientierten Pigmentpartikeln erhalten, der durch UV-Belichtung (20 mW/cm², 60s) photochemisch vernetzt wurde.

Dieser Film zeigt die gleichen Eigenschaften wie das in Beispiel 1 beschriebene optische Element.

### Beispiel 3

Ein ungesättigtes Polyesterharz (erhältlich unter der Bezeichnung Vestopal 400 bei Hüls AG) wurde mit 50% Styrol verdünnt und nach der dem Polyesterharz anliegenden Vorschrift mit Härter (Cyclonox BT-50, Akzo) und Co-Beschleuniger (1%) versetzt. 80 Gewichtsteile dieser Mischung wurden mit 20 Gewichtsteilen grünem LC-Pigment gemischt.

Durch 'spin coating' (1000 1/min, 10s) dieser Mischung auf einer Glasplatte wurde ein dünner Film mit nahezu ausschließlich parallel zur Glasoberfläche orientierten Pigmentpartikeln hergestellt und nach Vorschrift ausgehärtet. Durch Aufbringen einer pigment freien Deckharzschicht kann die Oberfläche geglättet und damit die Streuung verringert werden.

Dieser Film zeigt die gleichen optischen Eigenschaften wie das in Beispiel 1 beschriebene optische Element.

## Patentansprüche (Patentansprüche für folgende(n) Vertragsstaat(en): DE, FR, GB, IT)

1. Farbfilter enthaltend wellenlängen- und polarisationsselektive optische Elemente, die Pigmente eingebettet in ein transparentes Bindemittel enthalten, dadurch gekennzeichnet, daß die Pigmente mindestens eine dreidimensional vemetzte Substanz flüssigkristalliner Struktur mit chiraler Phase umfassen, eine Dicke von 1 bis 100 µm und einen Durchmesser von 1 bis 10000 µm haben und der Brechungsindex des Bindemittelsystems mit dem Brechungsindex der jeweils eingesetzten Pigmente übereinstimmt.

2. Breitbandpolarisator enthaltend wellenlängen- und polarisationsselektive optische Elemente, die Pigmente eingebettet in ein transparentes Bindemittel enthalten, dadurch gekennzeichnet, daß die Pigmente mindestens eine dreidimensional vernetzte Substanz flüssigkristalliner Struktur mit chiraler Phase umfassen, eine Dicke von 1 bis 100 µm und einen Durchmesser von 1 bis 10000 µm haben und der Brechungsindex des Bindemittelsystems mit dem Brechungsindex der jeweils eingesetzten Pigmente übereinstimmt.

3. Notch-Filter enthaltend wellenlängen- und polarisationsselektive optische Elemente, die Pigmente eingebettet in ein transparentes Bindemittel enthalten, dadurch gekennzeichnet, daß die Pigmente mindestens eine dreidimensional vernetzte Substanz flüssigkristalliner Struktur mit chiraler Phase umfassen, eine Dicke von 1 bis 100 µm und einen Durchmesser von 1 bis 10000 µm haben und der Brechungsindex des Bindemittelsystems mit dem Brechungsindex der jeweils eingesetzten Pigmente übereinstimmt.

## Patentansprüche (Patentansprüche für folgende(n) Vertragsstaat(en): CH, LI, SE)

1. Wellenlängen- und polarisationsselektive optische Elemente, die Pigmente eingebettet in ein transparentes Bindemittel enthalten, dadurch gekennzeichnet, daß die Pigmente mindestens eine dreidimensional vernetzte Substanz flüssigkristalliner Struktur mit chiraler Phase umfassen, eine Dicke von 1 bis 100 µm und einen Durchmesser von 1 bis 10000 µm haben und der Brechungsindex des Bindemittelsystems mit dem Brechungsindex der jeweils eingesetzten Pigmente übereinstimmt.

2. Optische Elemente gemäß Anspruch 1, dadurch gekennzeichnet, daß sie einen Bedeckungsgrad von 1 aufweisen, wobei unter Bedeckungsgrad der Quotient aus Fläche des optischen Elements, die durch Pigmente abgedeckt ist, durch Fläche des optischen Elements, die mit der Mischung aus Bindemittel und LC-Pigment bedeckt ist, zu verstehen ist.

3. Verfahren zur Herstellung von optischen Komponenten gemäß Anspruch 1 oder 2, dadurch gekennzeichnet, daß Pigmente mit den gewünschten Eigenschaften (Reflexionsfarbe, Polarisationsrichtung) mit einem geeigneten Bindemittelsystem gemischt werden.

4. Farbfilter enthaltend wellenlängen- und polarisationsselektive optische Elemente gemäß Anspruch 1.

5. Breitbandpolarisator enthaltend wellenlängen- und polarisationsselektive optische Elemente gemäß Anspruch 1.

6. Notch-Filter enthaltend wellenlängen- und polarisationsselektive optische Elemente gemäß Anspruch 1.

## Claims (Claims for the following Contracting State(s): DE, FR, GB, IT)

1. Colour filter comprising wavelength- and polarization-selective optical elements containing pigments embedded in a transparent binder, characterized in that the pigments comprise at least one three-dimensionally crosslinked substance having a liquid-crystalline structure with a chiral phase, and have a thickness of from 1 to 100 µm and a diameter of from 1 to 10,000 µm, and the refractive index of the binder system corresponds to the refractive index of the particular pigments employed.

2. Broad-band polarizer comprising wavelength- and polarization-selective elements containing pigments embedded in a transparent binder, characterized in that the pigments comprise at least one three-dimensionally crosslinked substance having a liquid-crystalline structure with a chiral phase and have a thickness of from 1 to 100 µm and a diameter of from 1 to 10,000 µm, and the refractive index of the binder system corresponds to the refractive index of the particular pigments employed.

3. Notch filter comprising wavelength- and polarization-selective elements containing pigments embedded in a transparent binder, characterized in that the pigments comprise at least one three-dimensionally crosslinked substance having a liquid-crystalline structure with a chiral phase and have a thickness of from 1 to 100 µm and a diameter of from 1 to 10,000 µm, and the refractive index of the binder system corresponds to the refractive index of the particular pigments employed.

## Claims (Claims for the following Contracting State(s): CH, LI, SE)

1. Wavelength- and polarization-selective optical elements containing pigments embedded in a transparent binder, characterized in that the pigments comprise at least one three-dimensionally crosslinked substance having a liquid-crystalline structure with a chiral phase, and have a thickness of from 1 to 100 µm and a diameter of from 1 to 10,000 µm, and the refractive index of the binder system corresponds to the refractive index of the particular pigments employed.

2. Optical elements according to Claim 1, characterized in that they have a degree of covering of 1, where degree of covering is taken to mean the quotient of the area of the optical element covered by the pigments and the area of the optical element covered by the mixture of binder and LC pigment.

3. Process for the production of optical components according to Claim 1 or 2, characterized in that pigments having the desired properties (reflection colour, polarization direction) are mixed with a suitable binder system.

4. Colour filter comprising wavelength- and polarization-selective optical elements according to Claim 1.

5. Broad-band polarizer comprising wavelength- and polarization-selective optical elements according to Claim 1.

6. Notch filter comprising wavelength- and polarization-selective optical elements according to Claim 1.

## Revendications (Revendications pour l'(les) Etat(s) contractant(s) suivant(s): DE, FR, GB, IT)

1. Filtre coloré contenant des éléments optiques sélectifs suivant la longueur d'onde et la polarisation, qui contiennent des pigments noyés dans un liant transparent, caractérisé en ce que les pigments comprennent au moins une substance réticulée de manière tridimensionnelle à structure de cristaux liquides à phase chirale, qu'ils possèdent une épaisseur de 1 à 100 microns et un diamètre de 1 à 10000 microns, et que l'indice de réfraction du système de liant concorde avec l'indice de réfraction des pigments utilisés à chaque fois.

2. Polarisateur à bande large, contenant des éléments optiques sélectifs suivant la longueur d'onde et la polarisation, qui contiennent des pigments noyés dans un liant transparent, caractérisé en ce que les pigments englobent au moins une substance réticulée de manière tridimensionnelle à structure de cristaux liquides à phase chirale, qu'ils possèdent une épaisseur de 1 à 100 microns et un diamètre de 1 à 10000 microns, et que l'indice de réfraction du système de liant concorde avec l'indice de réfraction des pigments utilisés à chaque fois.

3. Filtre coupe-bande contenant des éléments optiques sélectifs suivant la longueur d'onde et la polarisation, qui contiennent des pigments noyés dans un liant transparent, caractérisé en ce que les pigments englobent au moins une substance réticulée de manière tridimensionnelle à structure de cristaux liquides à phase chirale, qu'ils possèdent une épaisseur de 1 à 100 microns et un diamètre de 1 à 10000 microns, et que l'indice de réfraction du système de liant concorde avec l'indice de réfraction des pigments utilisés à chaque fois.

## Revendications (Revendications pour l'(les) Etat(s) contractant(s) suivant(s): CH, LI, SE)

1. Eléments optiques sélectifs suivant la longueur d'onde et la polarisation, qui contiennent des pigments noyés dans un liant transparent, caractérisés en ce que les pigments comprennent au moins une substance réticulée de manière tridimensionnelle à structure de cristaux liquides à phase chirale, qu'ils possèdent une épaisseur de 1 à 100 microns et un diamètre de 1 à 10000 microns, et que l'indice de réfraction du système de liant concorde avec l'indice de réfraction des pigments utilisés à chaque fois.

2. Eléments optiques selon la revendication 1, caractérisés en ce qu'ils présentent un degré de recouvrement de 1, en entendant par le terme de degré de recouvrement, le quotient de la surface de l'élément optique, qui est recouverte de pigments, par la surface de l'élément optique, qui est recouverte du mélange de liant et de pigment CL.

3. Procédé de fabrication de composants optiques selon la revendication 1 ou 2, caractérisé en ce que les pigments ayant les propriétés souhaitées (couleur de réflexion, direction de polarisation) sont mélangés à un système de liant approprié.

4. Filtre coloré, contenant des éléments optiques sélectifs suivant la longueur d'onde et la polarisation, selon la revendication 1.

5. Polarisateur à bande large, contenant des éléments optiques sélectifs suivant la longueur d'onde et la polarisation, selon la revendication 1.

6. Filtre coupe-bande, contenant des éléments optiques sélectifs suivant la longueur d'onde et la polarisation, selon la revendication 1.
